(19)

Europäisches
Patentamt
European
Patent Office
Office européen
des brevets

(11) **EP 3 225 299 A1**

(12) **EUROPEAN PATENT APPLICATION**

published in accordance with Art. 153(4) EPC

(43) Date of publication:
**04.10.2017 Bulletin 2017/40**

(21) Application number: **15863061.6**

(22) Date of filing: **27.11.2015**

(51) Int Cl.:
**B01D 71/70** (2006.01)     **B01D 69/10** (2006.01)
**B01D 69/12** (2006.01)     **B01D 71/16** (2006.01)
**B01D 71/56** (2006.01)     **C08F 230/08** (2006.01)

(86) International application number:
**PCT/JP2015/083483**

(87) International publication number:
**WO 2016/084958 (02.06.2016 Gazette 2016/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.11.2014 JP 2014241228
26.12.2014 JP 2014264348**

(71) Applicant: **Toray Industries, Inc.
Tokyo 103-8666 (JP)**

(72) Inventors:
• **TOKUYAMA Takahiro**
**Otsu-shi**
**Shiga 520-8558 (JP)**
• **TOMIOKA Hiroki**
**Otsu-shi**
**Shiga 520-8558 (JP)**
• **OGAWA Takafumi**
**Otsu-shi**
**Shiga 520-8558 (JP)**
• **SUZUKI Yutaro**
**Otsu-shi**
**Shiga 520-8558 (JP)**

(74) Representative: **Hoefer & Partner Patentanwälte
mbB**
**Pilgersheimer Straße 20**
**81543 München (DE)**

(54) **MULTILAYER SEMIPERMEABLE MEMBRANE**

(57)    The present invention provides a semipermeable membrane which has resistance to oxidizing agents even in the presence of heavy metals and which, despite this, can have salt-removing performance equal to that of semipermeable membranes having poor resistance to oxidizing agents. A coated semipermeable membrane of the invention includes a semipermeable layer and a polymer layer formed on the semipermeable layer, and the polymer layer includes a polymerization product formed by both condensation of hydrolyzable groups possessed by the following compound (A) and polymerization of the compound (A) with the following compound (B): (A) a silicon compound having a silicon atom, a reactive group including an ethylenically unsaturated group directly bonded to the silicon atom, and a hydrolyzable group directly bonded to the silicon atom; and (B) a compound other than the compound (A), which has both a hydrophilic group and an ethylenically unsaturated group.

EP 3 225 299 A1

*Fig. 1*

**Description**

TECHNICAL FIELD

The present invention relates to a semipermeable membrane useful for selective separation of a liquid mixture, and relates to a coated semipermeable membrane having excellent resistance to oxidizing agents.

BACKGROUND ART

Known as separation membranes for water treatment which are for preventing the permeation of components of dissolved matter are an asymmetric semipermeable membrane formed of a polymer such as cellulose acetate, and a composite semipermeable membrane including a microporous supporting layer and a separation functional layer disposed on the microporous supporting layer.

In particular, a composite semipermeable membrane having a separation functional layer formed of a polyamide (hereinafter referred to as "polyamide separation functional layer") not only has an advantage in that the membrane can be easily produced by the interfacial polycondensation of a polyfunctional amine with a polyfunctional acid halide, but also has high pressure resistance and is capable of attaining a high salt rejection and a high permeation flux. Composite semipermeable membranes of this type are hence used most extensively (Patent Documents 1 and 2).

However, the polyamide separation functional layer has insufficient durability in terms of resistance to oxidizing agents, and the semipermeable membrane is deteriorated in salt-removing performance and selectively separating performance by the substances used for membrane sterilization, such as chlorine and hydrogen peroxide.

Examples of techniques for obtaining a semipermeable membrane having improved durability in terms of resistance to oxidizing agents include the followings. Patent Document 3 describes a technique in which the nitrogen atoms of a polyamide, which are reaction sites where the polyamide reacts with oxidizing agents, are substituted with alkyl groups. Patent Document 4 describes a technique in which a surface of a polyamide membrane is brought into contact with an emulsion solution of a polymer such as poly(vinyl acetate) and is then dried by heating to a temperature not lower than the glass transition temperature of the polymer. Patent Document 5 describes a technique in which an amine compound having at least two amino groups in the molecule thereof is reacted, on a porous substrate, with an organosilicon compound having an alkoxysilane structure in the molecule thereof and having, in the molecule thereof, at least one functional group selected from the group consisting of an amino group and an oxirane ring, thereby forming a thin membrane which serves a separating function.

BACKGROUND ART DOCUMENT

PATENT DOCUMENT

Patent Document 1: U.S. Patent 3,133,132
Patent Document 2: U.S. Patent 4,277,344
Patent Document 3: JP-A-2002-336666
Patent Document 4: JP-A-2010-201303
Patent Document 5: JP-A-9-99228

NON-PATENT DOCUMENT

Non-Patent Document 1: Kurihara et al., Polymer Journal, Vol.23, p.513, The Society of Polymer Science, Japan (1991)

SUMMARY OF THE INVENTION

PROBLEMS THAT THE INVENTION IS TO SOLVE

However, the techniques described in Patent Documents 3 to 5 have a problem in that the initial salt-removing performance, i.e., the salt-removing performance which has not been affected by any oxidizing agent, is low.

Meanwhile, Non-Patent Document 1 indicates that the oxidation of a polyamide is considerably accelerated in cases when an oxidizing agent coexists with an exceedingly slight amount of a heavy metal. Since the raw water to be treated using water treatment membranes contains heavy metals in many cases, there are often cases where an oxidizing agent and a heavy metal coexist in order that the water treatment membranes have practical resistance to oxidizing agents.

An object of the present invention is to provide a semipermeable membrane which has resistance to oxidizing agents even in the presence of heavy metals and which, despite this, can have salt-removing performance equal to that of semipermeable membranes having poor resistance to oxidizing agents.

MEANS FOR SOLVING THE PROBLEMS

In order to solve the above-described problem, the present invention has any of the following configurations (1) to (8).

(1) A coated semipermeable membrane including a semipermeable layer and a polymer layer formed on the semipermeable layer,
in which the polymer layer includes a polymerization product formed by both condensation of hydrolyzable groups possessed by the following compound (A) and polymerization of the compound (A) with the following compound (B):

(A) a silicon compound having a silicon atom, a reactive group including an ethylenically unsaturated group directly bonded to the silicon atom, and a hydrolyzable group directly bonded to the silicon atom; and
(B) a compound other than the compound (A), which has both a hydrophilic group and an ethylenically unsaturated group.

(2) The coated semipermeable membrane according to (1), in which the hydrophilic group of the compound (B) is at least one functional group selected from a carboxyl group, a sulfonic acid group, and a phosphonic acid group.
(3) The coated semipermeable membrane according to (1) or (2), in which the compound (A) is represented by the following general formula (a):

$$Si(R1)_m(R2)_n(R3)_{4-m-n} \qquad (a),$$

in which R1 represents a reactive group including an ethylenically unsaturated group; R2 represents at least one group selected from the group consisting of alkoxy groups, alkenyloxy groups, a carboxy group, ketoxime groups, an isocyanate group, and halogen atoms; R3 represents at least one of hydrogen and alkyl groups; m and n are integers satisfying $m+n \leq 4$, $m \geq 1$, and $n \geq 1$; when m is 2 or larger, the R1 moieties may be the same or different; when n is 2 or larger, the R2 moieties may be the same or different; and when (4-m-n) is 2 or larger, the R3 moieties may be the same or different.
(4) The coated semipermeable membrane according to any one of (1) to (3), in which the polymer layer includes a polymerization product formed by both condensation of the hydrolyzable groups possessed by the compound (A) and polymerization of the compound (A) with the compound (B) which is two or more compounds, and
the two or more compounds (B) include the following compound (B1) and compound (B2):

(B1) a compound other than the compound (A), which has one or more anionic groups and one or more ethylenically unsaturated groups; and
(B2) a compound other than the compound (A) and the compound (B1), which has one or more cationic groups and one or more ethylenically unsaturated groups.

(5) The coated semipermeable membrane according to (4), in which the anionic group of the compound (B1) is at least one functional group selected from a carboxyl group, a sulfonic acid group, and a phosphonic acid group.
(6) The coated semipermeable membrane according to (4) or (5), in which the cationic group of the compound (B2) is at least one functional group selected from ammonium salts and imidazolium salts.
(7) The coated semipermeable membrane according to any one of (1) to (6), in which the polymer layer has a thickness of 50 nm to 500 nm.
(8) The coated semipermeable membrane according to any one of (1) to (7), in which the semipermeable layer includes a microporous supporting layer and a separation functional layer disposed on the microporous supporting layer, and
the separation functional layer includes a polyamide formed by polycondensation of a polyfunctional amine with a polyfunctional acid halide.

ADVANTAGE OF THE INVENTION

The membrane of the present invention includes a semipermeable layer and, disposed thereon, a polymer layer including a polymerization product formed by both condensation of hydrolyzable groups possessed by the compound (A) and polymerization of the compound (A) with the compound (B), whereby the semipermeable layer renders a high salt rejection possible, and the polymer layer prevents heavy metals from coming into contact with the semipermeable layer, thereby enabling the membrane to have high resistance to oxidizing agents even in the presence of heavy metals. Since the membrane of the present invention thus has improved resistance to oxidizing agents in the presence of heavy metals, the membrane renders a stable continuous operation possible while exhibiting high salt-removing performance even when used for raw water which contains an oxidizing agent remaining therein due to a sterilization treatment, etc.

BRIEF DESCRIPTION OF THE DRAWINGS

[Fig. 1] Fig. 1 is a cross-sectional view which diagrammatically shows the configuration of a coated semipermeable membrane according to a first embodiment of the present invention, the membrane including an asymmetric semipermeable layer.
[Fig. 2] Fig. 2 is a cross-sectional view which diagrammatically shows the configuration of a coated semipermeable membrane according to a second embodiment of the present invention, the membrane including a composite semipermeable layer.

MODE FOR CARRYING OUT THE INVENTION

I. Polymer-coated Semipermeable Membrane

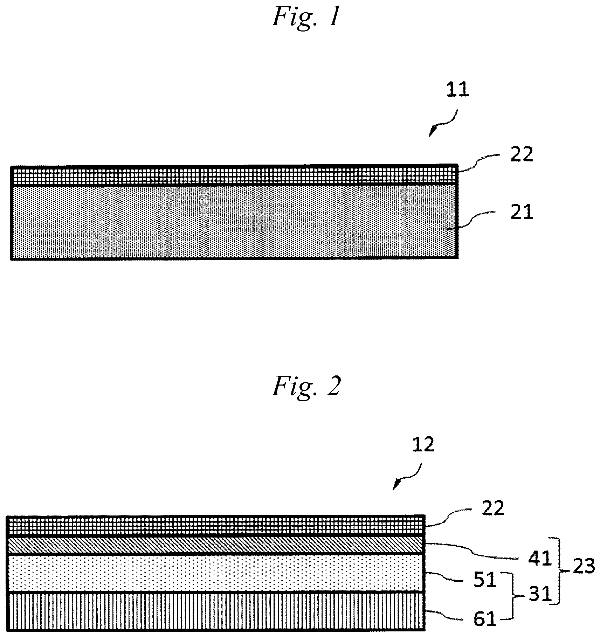

In Fig. 1 and Fig. 2 are shown examples of the structure of the polymer-coated semipermeable membrane of the present invention. The polymer-coated semipermeable membranes ("11" in Fig. 1 and "12" in Fig. 2) each include a semipermeable layer ("21" in Fig. 1 or "23" in Fig. 2) and a polymer layer ("22" in Fig. 1 or Fig. 2) formed on the semipermeable layer.
The coated semipermeable membranes are membranes having the function of removing ions from aqueous solutions. Specific examples of the "coated semipermeable membranes" include an RO (reverse osmosis) membrane and an NF (nanofiltration) membrane.

[1. Semipermeable Layer]

In this description, the term "semipermeable layer" means a layer which substantially has the ion-removing properties of the polymer-coated semipermeable membrane. Namely, the semipermeable layer by itself has the function of removing ions from aqueous solutions and is capable of functioning as an RO membrane or NF membrane. Such semipermeable layers are classified roughly into asymmetric semipermeable layers (i.e., asymmetric semipermeable membranes) and composite semipermeable layers (i.e., composite semipermeable membranes).

(1-1) Asymmetric Semipermeable Layer

The coated semipermeable membrane 11 shown in Fig. 1 includes an asymmetric semipermeable membrane 21 and a polymer layer 22 superposed thereon. The asymmetric semipermeable layer 21 is a semipermeable layer having a structure in which the pore diameter increases from a first surface of the membrane toward a second surface thereof. That part of the asymmetric semipermeable layer 21 which is located in the vicinity of the dense membrane surface exhibits separation performance, and the inner part having a large pore diameter serves to reduce water permeation resistance and enable the membrane to retain water permeability and strength.
Examples of the material of the asymmetric semipermeable layer include cellulose acetate, cellulose triacetate, and polyamides.

(1-2) Composite Semipermeable Layer

The coated semipermeable membrane 12 shown in Fig. 2 includes a composite semipermeable layer 23 and a polymer layer 22 superposed thereon. The composite semipermeable layer 23 includes a microporous supporting layer 51 and a separation functional layer 41 disposed on the microporous supporting layer 51.

(1-2-1) Microporous Supporting Layer

The microporous supporting layer supports the separation functional layer to thereby impart strength to the composite semipermeable layer. The separation functional layer is disposed on at least one surface of the microporous supporting membrane. In Fig. 2, a separation functional layer 41 has been disposed on one surface of the microporous supporting layer 51. Hereinafter, the microporous supporting layer is often referred to simply as "supporting layer".

It is preferable that the surface of the supporting layer 51 (the surface on the side where the supporting layer 51 is to be in contact with the separation functional layer 41) has a pore diameter in the range of 1 nm to 100 nm. So long as the pore diameter of the surface of the supporting layer is within that range, a separation functional layer having few defects can be formed on the surface. In addition, the composite semipermeable layer obtained can have a high pure-water permeation flux, and the separation functional layer can retain the structure thereof during high-pressure operations without sinking into pores of the supporting membrane.

The pore diameter of a surface of the supporting layer 51 can be calculated from an electron photomicrograph. The surface of the supporting layer is photographed with an electron microphotograph, and the diameters of all the pores which can be observed are measured. By calculating an arithmetic average thereof, the pore diameter can be determined. In the case of a pore which is not circular, the diameter thereof can be determined by a method in which a circle (equivalent circle) having the same area as the pore is determined, for example, with an image processor and the diameter of this equivalent circle is taken as the diameter of the pore. In another method, a principle in which water present in minute pores has a lower melting point than ordinary water is utilized and pore diameters can be determined by differential scanning calorimetry (DSC). Details thereof are described in a document (Ishikiriyama et al., Journal of Colloid and Interface Science, Vol. 171, p.103, Academic Press Inc. (1995)), etc.

The thickness of the supporting layer 51 is preferably in the range of 1 $\mu$m to 5 mm, more preferably in the range of 10$\mu$m to 100 $\mu$m. The supporting layer having too small a thickness is prone to have reduced strength and this tends to result in a decrease in the strength of the composite semipermeable layer. In case where the thickness thereof is too large, this supporting layer and the composite semipermeable layer obtained therefrom are difficult to handle when used in a bent state, etc.

Materials for constituting the supporting layer 51 are not particularly limited. Examples of materials for constituting the supporting layer include homopolymers and copolymers, such as polysulfones, polyethersulfones, polyamides, polyesters, cellulosic polymers, vinyl polymers, poly(phenylene sulfide), poly(phenylene sulfide sulfone)s, poly(phenylene sulfone)s, and poly(phenylene oxide). The supporting layer may include only one of these polymers, or may include a plurality of polymers among these.

Examples of the cellulosic polymers, among those polymers, include cellulose acetate and cellulose nitrate. Preferred examples of the vinyl polymers include polyethylene, polypropylene, poly(vinyl chloride), and polyacrylonitrile. Preferred polymers are homopolymers and copolymers such as polysulfones, polyethersulfones, polyamides, polyesters, cellulose acetate, cellulose nitrate, poly(vinyl chloride), polyacrylonitrile, poly(phenylene sulfide), and poly(phenylene sulfide sulfone)s. Especially preferred of these materials are polysulfones and polyethersulfones, because these polymers are high in chemical stability, mechanical strength and thermal stability and are easy to mold.

It is preferable that the supporting layer 51 includes any of those polymers as the main component thereof. Specifically, the proportion of any of those polymers in the supporting layer is preferably 80% by weight or larger, more preferably 90% by weight or larger, even more preferably 95% by weight or larger. The supporting layer may be constituted only of any of those polymers.

(1-2-2) Separation Functional Layer

The separation functional layer 41 has the function of separating ions from aqueous solutions. Namely, the ion-separating function of the semipermeable layer is rendered possible by the separation functional layer.

The separation functional layer 41 can include a polymer such as a polyamide, cellulose acetate, or cellulose triacetate as the main component. The proportion of the polymer in the separation functional layer is preferably 80% by weight or larger, more preferably 90% by weight or higher, even more preferably 95% by weight or larger. The separation functional layer may be constituted only of any of these polymers. For example, the separation functional layer may be a layer including a polyamide formed by subjecting a polyfunctional amine and a polyfunctional acid halide to interfacial polycondensation on a supporting layer 51, or may be a layer formed from cellulose acetate, cellulose triacetate, a polyamide, or the like by the above-mentioned nonsolvent-induced phase separation method.

The polyamide layer formed by the interfacial polycondensation of the polyfunctional amine with the polyfunctional acid halide is explained below.

The polyfunctional amine is at least one ingredient selected from aliphatic polyfunctional amines and aromatic polyfunctional amines.

The term "aliphatic polyfunctional amine" means an aliphatic amine having two or more amino groups in the molecule thereof. The aliphatic polyfunctional amines are not limited to specific compounds, and examples thereof include piperazine-based amines and derivatives thereof. Examples of the aliphatic polyfunctional amines include at least one compound selected from the group consisting of piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, and 2,5-di-n-butylpiperazine. From the standpoint of stable exhibition of the performance, piperazine and 2,5-dimethylpiperazine are especially preferred as the aliphatic polyfunctional amines.

Meanwhile, the term "aromatic polyfunctional amine" means an aromatic amine having two or more amino groups in the molecule thereof The aromatic polyfunctional amines are not limited to specific compounds. However, examples of the aliphatic polyfunctional amines include at least one compound selected from the group consisting of metaphenylenediamine, paraphenylenediamine, 1,3,5-triaminobenzene, and the like and N-alkylated forms thereof, such as N,N-dimethylmetaphenylenediamine, N,N-diethylmetaphenylenediamine, N,N-dimethylparaphenylenediamine, and N,N-diethylparaphenylenediamine. From the standpoint of stable exhibition of the performance, metaphenylenediamine and 1,3,5-triaminobenzene are especially preferred as the aliphatic polyfunctional amines.

The term "polyfunctional acid halide" means an acid halide having two or more halogenocarbonyl groups in the molecule thereof. The polyfunctional acid halide may be any such acid halide which reacts with the aromatic polyfunctional amines to thereby yield polyamides. The polyfunctional acid halide is not limited to specific compounds. As the polyfunctional acid halide, use can be made, for example, of acid halides of at least one compound selected from the group consisting of oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, 1,3,5-benzenetricarboxylic acid, 1,2,4-benzenetricarboxylic acid, 1,3-benzenedicarboxylic acid, and 1,4-benzenedicarboxylic acid. Acid chlorides are preferred among such polyfunctional acid halides. Preferred especially from the standpoints of profitability, availability, handleability, reactivity, etc. is trimesoyl chloride, which is a polyfunctional acid halide of 1,3,5-benzenetricarboxylic acid. Although one of these polyfunctional acid halides may be used alone, a mixture of some of these may be used.

Details of the interfacial polymerization will be described layer.

(1-2-3) Substrate

The composite semipermeable layer 23 may further include a substrate 61 as shown in Fig. 2. The inclusion of the substrate 61 enables the composite semipermeable layer to have high strength and dimensional stability. The multilayer structure of the supporting layer and the substrate is sometimes referred to as "supporting membrane". In Fig. 2, the supporting membrane is designated by numeral "31 ".

Examples of the substrate 61 include fabric, nonwoven fabric, and paper.

It is preferred to use a fibrous substrate as the substrate 61, from the standpoints of strength, ability to form ruggedness, and fluid permeability. Either long-fiber nonwoven fabric or short-fiber nonwoven fabric is preferred as the fibrous substrate. In particular, long-fiber nonwoven fabric has excellent suitability for membrane formation and, hence, is effective in avoiding the following troubles: when a solution of a high-molecular-weight polymer is poured onto a substrate, the solution infiltrates thereinto excessively to reach to the back surface; the microporous supporting layer peels off the substrate; the composite semipermeable layer has unevenness in thickness due to the fluffing, etc. of a substrate; and defects such as pinholes arise.

In cases when the substrate includes long-fiber nonwoven fabric configured of thermoplastic continuous filaments, it is possible to inhibit thickness unevenness and membrane defects from occurring due to fiber fluffing during the pouring of a polymer solution, as compared with the case of short-fiber nonwoven fabric. Furthermore, since tension is applied in the direction of membrane formation when the composite semipermeable layer is continuously formed, it is preferable that long-fiber nonwoven fabric having excellent dimensional stability is used as the substrate.

From the standpoints of shapability and strength, it is preferable that the long-fiber nonwoven fabric is one in which the fibers in a surface layer on the side opposite from the supporting layer are longitudinally oriented more than the fibers present in a surface layer on the supporting layer side. Such a structure is highly effective in maintaining the strength, thereby preventing membrane breakage, etc. In the case where ruggedness is imparted to the composite semipermeable layer by embossing or the like, the multilayer structure including a supporting layer and a substrate shows improved shapability so long as the substrate is long-fiber nonwoven fabric. The surface of the composite semipermeable layer hence has a stable rugged shape. Consequently, use of long-fiber nonwoven fabric is preferred.

It is preferable that the thickness of the substrate is 50 $\mu$m to 150 $\mu$m.

[2. Polymer Layer]

The polymer layer includes a polymerization product formed by both condensation of hydrolyzable groups possessed by a compound (A) and polymerization of the compound (A) with a compound (B).

Compound (A) is a silicon compound having a silicon atom, a reactive group including an ethylenically unsaturated group directly bonded to the silicon atom, and a hydrolyzable group directly bonded to the silicon atom. Compound (B) is a compound other than the compound (A), which has both one or more hydrophilic groups and one or more ethylenically unsaturated groups.

First, the compound (A) is explained.

Examples of the reactive group including an ethylenically unsaturated group include a vinyl group, an allyl group, a methacryloxyethyl group, a methacryloxypropyl group, an acryloxyethyl group, an acryloxypropyl group, and a styryl group. Preferred from the standpoint of polymerizability are a methacryloxypropyl group, an acryloxypropyl group, and a styryl group. The silicon compound (A) may have at least one such reactive group. In the case of silicon compounds (A) having a plurality of such reactive groups, one silicon compound (A) may have multiple kinds of reactive groups.

Examples of the hydrolyzable group include an alkoxy group, an alkenyloxy group, a carboxy group, a ketoxime group, an aminohydroxy group, a halogen atom, and an isocyanate group. The alkoxy group is preferably one having 1-10 carbon atoms, more preferably one having 1 or 2 carbon atoms.

The alkenyloxy group is preferably one having 2-10 carbon atoms, more preferably one having 2-4 carbon atoms, even more preferably one having 3 carbon atoms. The carboxy group is preferably one having 2-10 carbon atoms, more preferably one having 2 carbon atoms, i.e., an acetoxy group. Examples of the ketoxime group include a methyl ethyl ketoxime group, a dimethyl ketoxime group, and a diethyl ketoxime group. The aminohydroxy group is a group in which the amino group has been bonded to the silicon atom through an oxygen atom. Examples thereof include a dimethylaminohydroxy group, a diethylaminohydroxy group, and a methylethylaminohydryxy group. As the halogen atom, a chlorine atom is preferred.

Especially preferred as the hydrolyzable group is an alkoxy group. This is because by using an alkoxy group when forming a separation functional layer, a reaction liquid having a viscosity and a pot life which are suitable for membrane formation is rendered possible.

The silicon compound (A) may have at least one such hydrolyzable group. One silicon compound (A) may have multiple kinds of hydrolyzable groups.

It is preferable that the compound (A) is a compound represented by the following general formula (a):

$$Si(R1)_m(R2)_n(R3)_{4-m-n} \qquad (a),$$

in which R1 represents a reactive group including an ethylenically unsaturated group; R2 represents at least one group selected from the group consisting of alkoxy groups, alkenyloxy groups, a carboxy group, ketoxime groups, an isocyanate group, and halogen atoms; R3 represents at least one of hydrogen and alkyl groups; m and n are integers satisfying $m+n \leq 4$, $m \geq 1$, and $n \geq 1$; when m is 2 or larger, the R1 moieties may be the same or different; when n is 2 or larger, the R2 moieties may be the same or different; and when (4-m-n) is 2 or larger, the R3 moieties may be the same or different

R1 is a reactive group including an ethylenically unsaturated group directly bonded to the silicon atom. The details of this reactive group R1 are as already explained above. R2 is a hydrolyzable group directly bonded to the silicon atom. The details of this hydrolyzable group R2 are as already explained above. The alkyl group as R3 preferably has 1-10 carbon atoms, more preferably 1 or 2 carbon atoms.

Examples of the compound (A) include vinyltrimethoxysilane, vinyltriethoxysilane, allyltrimethoxysilane, allyltriethoxysilane, styryltrimethoxysilane, styryltriethoxysilane, styrylethyltrimethoxysilane, styrylethyltriethoxysilane, methacryloxypropylmethyldimethoxysilane, methacryloxypropyltrimethoxysilane, methacryloxypropylmethyldiethoxysilane, methacryloxypropyltriethoxysilane, acryloxymethyltrimethoxysilane, acryloxypropyltrimethoxysilane, and (acryloxymethyl)phenethyltrimethoxysilane.

Next, the compound (B) is explained.

Since the compound (B) has a hydrophilic group, a polymer-coated semipermeable membrane having high selective water permeability and high salt rejection is rendered possible. It is preferable that the compound (B) is an organic compound. It is also preferable that the compound (B) has at least one hydrophilic group selected from a carboxyl group, a sulfonic acid group, a phosphonic acid group, a primary amino group, a secondary amino group, a tertiary amino group, a quaternary ammonium group, a heterocyclic group, and a phosphoric acid ester. Although the compound (B) can contain two or more hydrophilic groups, it is especially preferable that the compound (B) contains one or two hydrophilic groups.

The compound (B) further has an ethylenically unsaturated group having addition polymerizability. Examples of the compound (B), which has an ethylenically unsaturated group, include: derivatives of ethylene, propylene, or styrene; and methacrylic acid, acrylic acid, and derivatives thereof.

Examples of the compound (B) having a carboxyl group include maleic acid, maleic anhydride, acrylic acid, methacrylic acid, 2-(hydroxymethyl)acrylic acid, 4-(meth)acryloyloxyethyltrimellitic acid and the corresponding anhydride, 10-methacryloyloxydecylmalonic acid, N-(2-hydroxy-3-methacryloyloxypropyl)-N-phenylglycine, 4-vinylbenzoic acid, 3-phenylacrylic acid, and salts thereof.

Examples of the compound (B) having a sulfonic acid group include vinylsulfonic acid, allylsulfonic acid, 3-(acryloyloxy)propane-1-sulfonic acid, 3-(methacryloyloxy)propane-1-sulfonic acid, 4-methacrylamidobenzenesulfonic acid, 1,3-butadiene-1-sulfonic acid, 2-methyl-1,3-butadiene-1-sulfonic acid, 4-vinylphenylsulfonic acid, 3-(methacrylamido)propylsulfonic acid, and salts thereof

Examples of the compound (B) having a phosphonic acid group include vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacrylamido-4-methylphenylphosphonic acid, 2-[4-(dihydroxyphosphoryl)-2-oxa-butyl]acrylic acid, 2,4,6-trimethylphenyl ester of 2-[2-dihydroxyphosphoryl]ethoxymethyl]acrylic acid, and salts thereof

Examples of the compound (B) having a primary amino group, secondary amino group, tertiary amino group, quaternary ammonium group, or heterocyclic group include allylamine, N-methylallylamine, 4-aminostyrene, N,N-dimethylallylamine, 4-vinylbenzylamine, dimethylaminoethyl methacrylate, dimethylaminoethyl acrylate, dimethylaminomethyl methacrylate, dimethylaminomethyl acrylate, dimethylaminopropyl methacrylate, dimethylaminopropyl acrylate, dimethylaminobutyl methacrylate, dimethylaminobutyl acrylate, diethylaminoethyl methacrylate, diethylaminoethyl acrylate, diethylaminopropyl methacrylate, diethylaminopropyl acrylate, diethylaminobutyl methacrylate, diethylaminobutyl acrylate, dimethylaminoethyl(meth)acrylamide, diethylaminoethyl(meth)acrylamide, dimethylaminopropyl(meth)acrylamide, N-hydroxy(meth)acrylamide, 1-vinylpyridine, 2-vinylpyridine, 3-vinylpyridine, 4-vinylpyridine, 1-vinylimidazole, 2-vinylimidazole, 4-vinylimidazole, 5-vinylimidazole, vinylpyrrolidone, 2-vinyloxazole, 2-vinyl-2-oxazoline, and salts thereof.

Examples of the compound (B) having a phosphoric acid ester include 2-methacryloyloxypropyl monohydrogen phosphate, 2-methacryloyloxypropyl dihydrogen phosphate, 2-methacryloyloxyethyl monohydrogen phosphate, 2-methacryloyloxyethyl dihydrogen phosphate, 2-methacryloyloxyethyl phenyl hydrogen phosphate, 10-methacryloyloxydecyl dihydrogen phosphate, the mono(1-acryloylpiperidin-4-yl) eater of phosphoric acid, 6-(methacrylamido)hexyl dihydrogen phosphate, and salts thereof

In the polymer-coated semipermeable membrane of the present invention, the polymerization product formed by both condensation of hydrolyzable groups possessed by the compound (A) and polymerization of the compound (A) with the compound (B) has a high molecular weight because the product has been formed by both the condensation and the polymerization. Namely, the polymer layer includes a product of polymerization of the compound (A) with the compound (B), and the polymerization product has been crosslinked by condensation reaction which occurred by the functional group of the compound (A).

This polymer layer has resistance to oxidizing agents because the polymer layer itself has no sites for reaction with oxidizing agents. Furthermore, the polymer layer has satisfactory water permeability because of the hydrophilic groups thereof and, due to the crosslinked structure, a dense structure capable of blocking salts of heavy metals, etc. can be formed.

Namely, in the polymer-coated semipermeable membrane of the present invention, the polymer layer has sufficient water permeability and the semipermeable layer has the same molecular structure as the semipermeable layer that has not been coated with the polymer layer. The polymer-coated semipermeable membrane hence has separation performance at least equal to the separation performance of the semipermeable layer. Moreover, since the polymer layer itself removes heavy metals, the semipermeable layer, which underlies the polymer layer, is less apt to come into simultaneous contact with heavy metals and oxidizing agents. Consequently, the deterioration of the semipermeable layer by oxidizing agents is inhibited and, as a result, a semipermeable membrane having resistance to oxidizing agents even in the presence of heavy metals can be provided.

The polymerization product included in the polymer layer may have been formed from one compound (A) and one compound (B), or may have been formed from one compound (A) and a plurality of (two or more) compounds (B), or may have been formed from a plurality of (two or more) compounds (A) and one compound (B), or may have been formed from a plurality of (two or more) compounds (A) and a plurality of (two or more) compounds (B).

In the polymerization product, the portions derived from the compounds (A) and (B) which are monomers, that is, the portions corresponding to the monomers excluding the functional groups which took part in the polymerization, can be called "units" and distinguished from the "compounds" which have not been polymerized. Namely, the polymerization product can be considered to include units derived from at least one compound (A) and units derived from at least one compound (B).

In this description, the compounds which have been polymerized, i.e., units, are also called "compound (A)" and "compound (B)" like the compounds which have not been polymerized, for reasons of convenience of explanation, unless it is especially necessary to distinguish the polymerized compounds. However, the "compound (A)" and "compound (B)" as constituent elements in the polymerization product can be construed as "units derived from the compound (A)" and "units derived from the compound (B)", respectively.

In the case where a plurality of compounds (B) constitute the polymerization product, the plurality of compounds (B) may include: a compound (B1) which has one or more anionic groups and one or more ethylenically unsaturated groups and which is a compound other than the compound (A); and a compound (B2) which has one or more cationic groups and one or more ethylenically unsaturated groups and which is a compound other than the compound (A) and the compound (B1). When described with the term "units", this polymerization product can include units derived from the compound (A), units derived from the compound (B1), and units derived from the compound (B2).

Since the compound (B1) has the anionic group(s), a polymer-coated semipermeable membrane having high selective water permeability and high salt rejection is rendered possible. It is preferable that the compound (B1) is an organic compound. It is preferable that the compound (B1) has either at least one hydrophilic group selected from a carboxyl group, a sulfonic acid group, a phosphonic acid group, and a phosphoric acid ester or any of salts thereof, as the anionic group(s). Although the compound (B1) can contain two or more anionic groups, it is especially preferable that the compound (B1) contains one or two anionic groups.

The compound (B1) has one or more ethylenically unsaturated groups having addition polymerizability. Examples of the compound (B1), which has one or more ethylenically unsaturated groups, include: derivatives of ethylene, propylene, or styrene; and methacrylic acid, acrylic acid, and derivatives thereof.

Examples of the compound (B1) having a carboxyl group include maleic acid, maleic anhydride, acrylic acid, methacrylic acid, 2-(hydroxymethyl)acrylic acid, 4-(meth)acryloyloxyethyltrimellitic acid and the corresponding anhydride, 10-methacryloyloxydecylmalonic acid, N-(2-hydroxy-3-methacryloyloxypropyl)-N-phenylglycine, 4-vinylbenzoic acid, 3-phenylacrylic acid, and salts thereof.

Examples of the compound (B1) having a sulfonic acid group include vinylsulfonic acid, allylsulfonic acid, 3-(acryloyloxy)propane-1-sulfonic acid, 3-(methacryloyloxy)propane-1-sulfonic acid, 4-methacrylamidobenzenesulfonic acid, 1,3-butadiene-1-sulfonic acid, 2-methyl-1,3-butadiene-1-sulfonic acid, 4-vinylphenylsulfonic acid, 3-(methacrylamido)propylsulfonic acid, and salts thereof.

Examples of the compound (B1) having a phosphonic acid group include vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacrylamido-4-methylphenylphosphonic acid, 2-[4-(dihydroxyphosphoryl)-2-oxa-butyl]acrylic acid, the 2,4,6-trimethylphenyl ester of 2-[2-dihydroxyphosphoryl]ethoxymethyl]acrylic acid, and salts thereof

Examples of the compound (B1) having a phosphoric acid ester include 2-methacryloyloxypropyl monohydrogen phosphate, 2-methacryloyloxypropyl dihydrogen phosphate, 2-methacryloyloxyethyl monohydrogen phosphate, 2-methacryloyloxyethyl dihydrogen phosphate, 2-methacryloyloxyethyl phenyl hydrogen phosphate, 10-methacryloyloxydecyl dihydrogen phosphate, the mono(1-acryloylpiperidin-4-yl) eater of phosphoric acid, 6-(methacrylamido)hexyl dihydrogen phosphate, and salts thereof

Next, the compound (B2) is explained. Since the compound (B2) has the cationic group(s), a coated semipermeable membrane capable of removing heavy metals is rendered possible. It is preferable that the compound (B2) is an organic compound. It is preferable that the compound (B2) has an ammonium salt or an imidazolium salt as the cationic group(s). Examples of the compound (B2) having an ammonium salt include [2-(methacryloyloxy)ethyl]dimethyl(3-sulfopropyl)ammonium hydroxide, and examples of the compound (B2) having an imidazolium salt include 1-allyl-3-imidazolium chloride. Although the compound (B2) can contain two or more cationic groups, it is especially preferable that the compound (B2) contains one or two cationic groups.

The compound (B2) has one or more ethylenically unsaturated groups having addition polymerizability. Examples of the compound (B2), which has one or more ethylenically unsaturated groups, include: derivatives of ethylene, propylene, or styrene; and methacrylic acid, acrylic acid, and derivatives thereof

Examples of the compound (B1) having an ammonium salt or imidazolium salt include at least one compound selected from the group consisting of allylamine, N-methylallylamine, 4-aminostyrene, N,N-dimethylallylamine, 4-vinylbenzylamine, dimethylaminoethyl methacrylate, dimethylaminoethyl acrylate, dimethylaminomethyl methacrylate, dimethylaminomethyl acrylate, dimethylaminopropyl methacrylate, dimethylaminopropyl acrylate, dimethylaminobutyl methacrylate, dimethylaminobutyl acrylate, diethylaminoethyl methacrylate, diethylaminoethyl acrylate, diethylaminopropyl methacrylate, diethylaminopropyl acrylate, diethylaminobutyl methacrylate, diethylaminobutyl acrylate, dimethylaminoethyl(meth)acrylamide, diethylaminoethyl(meth)acrylamide, dimethylaminopropyl(meth)acrylamide, N-hydroxy(meth)acrylamide, 1-vinylpyridine, 2-vinylpyridine, 3-vinylpyridine, 4-vinylpyridine, 1-vinylimidazole, 2-vinylimidazole, 4-vinylimidazole, 5-vinylimidazole, 1-allylimidazole, vinylpyrrolidone, 2-vinyloxazole, and 2-vinyl-2-oxazoline, and further include derivatives of these compounds and salts thereof

In the case where the compound (B1) and the compound (B2) are used as compounds (B), there is an advantage in that since the polymer layer has both anionic groups and cationic groups, the charges on the membrane surface have been neutralized and the adhesion of heavy metals and other substances to the membrane surface is inhibited, besides the advantages due to the polymer layer which were described above.

The thickness of the polymer layer formed on the semipermeable layer can be ascertained, for example, from a cross-section photograph taken with a scanning electron microscope. The thickness of the polymer layer is preferably 50 nm or larger, more preferably 100 nm or larger. The larger the thickness of the polymer layer, the higher the effect of enhancing chlorine resistance. Consequently, so long as the water permeability of the polymer-coated semipermeable membrane is ensured, there is no particular important upper limit on the thickness thereof. Usually, however, the thickness of the polymer layer is preferably 1,000 nm or less, more preferably 500 nm or less. In cases when the polymer layer is formed in a reduced thickness within that range, not only the semipermeable layer can be made to exhibit the separation performance without considerably impairing the water permeability of the semipermeable layer, but also the surface of the semipermeable layer can be coated without leaving defects and resistance to oxidizing agents can hence be imparted.

The chemical structure of the polymer layer formed on the semipermeable layer can be determined by nuclear magnetic resonance spectroscopy (NMR). A solution of the polymer or a solid film is examined by NMR, and the signals are assigned. The chemical structure can be determined by calculating the copolymerization ratio between the compounds (A) and (B) from the signal areas. In the case where the compound (B) includes the compounds (B1) and (B2), the proportion thereof can also be calculated.

It is preferable that the copolymerization ratio between the compound (B1) and the compound (B2) is in the range of 45:5 to 5:45. In cases when the copolymerization ratio between the compound (B1), which has anionic group(s), and the compound (B2), which has cationic group(s), is within that range, the surface potential of the membrane is neutral or is close to neutrality. As a result, the adhesion of heavy metals to the coated semipermeable membrane can be inhibited.

Copolymerization ratio can be regulated by selecting monomers on the basis of Q value and e value or by changing the concentration of each monomer in the reaction liquid during the polymerization, the reaction time in the polymerization, etc.

Q value (also called "Alfrey-Price Q value") was presented by T. Alfrey and C. C. Price in 1948 as an index to the degree of conjugation between the double bond and substituent of a radical-polymerizable monomer, together with e value, which is an index to the electron density of the double bond. Styrene was used as a reference (Q=1.0, e=-0.8), and the Q values and e values of a large number of monomers have been determined experimentally.

The Q values and e values of representative monomers are summarized, for example, in J. Brandrup, E. H. Immergut, and E. A. Grulke, Polymer Handbook, (U.S.A.), 4th edition, John Wiley & Sons Inc., year 1999, pp. II/181 to II/319. Reference may be made to these, or the Q and e values of a monomer may be derived by the following method.

A method for deriving the Q value and e value of a monomer $M_1$ is as follows. First, the monomer $M_1$ is polymerized with a monomer $M_2$ having known Q and e values, in various molar ratios ($F=[M_1]/[M_2]$). In this polymerization, the consumption ratio between the monomers ($f=d[M_1]/d[M_2]$) in the initial stage of the polymerization is calculated from measurement data obtained by, for example, gas chromatography. It is known that F and f satisfies the relationship represented by expression ($\alpha$). Consequently, by plotting F(f-1)/f against $F^2$/f and approximating the plot by a straight line, copolymerizability ratios $r_1$ and $r_2$ can be determined from the slope of the straight line and the ordinate intercept thereof.

$$F(f-1)/f = r_1 F^2/f - r_2 \qquad \text{expression } (\alpha)$$

The copolymerizability ratios $r_1$ and $r_2$ and the Q value and e value of the monomer $M_2$ ($Q_2$ and $e_2$) are substituted into expressions ($\beta$) and ($\gamma$), which were presented by T. Alfrey and C. C. Price. Thus, the Q value ($Q_1$) and e value ($e_1$) of the monomer $M_1$ can be derived.

$$r_1 = (Q_1/Q_2)\exp[-e_1(e_1-e_2)] \qquad \text{expression } (\beta)$$

$$r_2 = (Q_2/Q_1)\exp[-e_2(e_2-e_1)] \qquad \text{expression } (\gamma)$$

This method can be understood in detail by reference to document 1 (M. Fineman et al., Journal of Polymer Science, Vol.5. p.269, John Wiley & Sons Inc., 1950) and document 2 (Takayuki Otsu, Kaitei Kobunshi Gosei No Kagaku (Revised version, Chemistry of Polymer Synthesis), pp.111-116, Kagaku-Dojin Publishing Company, Inc., 1992).

In cases when the Q values and e values of monomers to be used can be known beforehand, it is possible to derive the copolymerizability ratios from these values and to predict a composition of the copolymer from the values. Although possible copolymer compositions include random, block, and alternating, it is possible to freely select monomers having Q and e values for giving a suitable copolymerization proportion according to the desired copolymer composition. The copolymer of the compounds (A) and (B) in the present invention may be any of a random copolymer, an alternating copolymer, and a block copolymer, or may have a nonlinear structure, e.g., a star shape or a comb shape. The copolymer may include a crosslinked structure.

Monomer charge ratio may be controlled on the basis of the Q values and e values of the monomers to be used, in order to obtain a copolymer into which the monomers have been incorporated in a desired ratio.

II. Process for Producing the Polymer-coated Semipermeable Membrane

The polymer-coated semipermeable membrane described above can be produced by a production process including a step in which a polymer layer is formed on a semipermeable layer.

[1. Formation of Polymer Layer]

The step of forming a polymer layer on a semipermeable layer is selected from the following steps (a) to (c).
(a) A step including: a step in which a compound (A) and a compound (B) are dissolved in a solvent; a step in which the compound (A) and the compound (B) are polymerized in the solvent by the ethylenically unsaturated groups to thereby obtain a solution of a polymerization product; a step in which this polymer solution is brought into contact with a semipermeable layer; and a step in which the product of polymerization of the compound (A) and compound (B) is condensed on the semipermeable layer by the hydrolyzable groups of the compound (A).

(b) A step including: a step in which a compound (A) is dissolved in a solvent; a step in which the hydrolyzable groups of the compound (A) are condensed in the solvent to thereby obtain a solution of a condensate; a step in which a compound (B) is added to the solution of a condensate and the resultant solution is brought into contact with a semipermeable layer; and a step in which the condensate of the compound (A) is polymerized with the compound (B) on the semipermeable layer by the ethylenically unsaturated groups.

(c) A step including: a step in which a compound (A) and a compound (B) are dissolved in a solvent to thereby obtain a solution of a mixture; a step in which the solution of a mixture is brought into contact with a semipermeable layer; a step in which the compound (A) and the compound (B) are polymerized on the semipermeable layer by the ethylenically unsaturated groups; and a step in which condensation by the hydrolyzable groups of the compound (A) is conducted on the semipermeable layer.

In step (c), either the step of conducting polymerization or the step of conducting condensation may be performed first, or these steps may be simultaneously performed.
Steps (a) to (c) for forming the polymer layer are explained below in more detail.
In step (a), the solvent in the step in which a compound (A) and a compound (B) are dissolved in a solvent is not particularly limited so long as the solvent is one which does not break the supporting layer and in which the compounds (A) and (B) and a polymerization initiator that is added according to need dissolve. Preferred as such solvent are water, alcohol-based organic solvents, ether-based organic solvents, ketone-based organic solvents, and mixtures thereof. An acid or an alkali may be added to the solvent according to need, whereby the dissolution of the material of the supporting layer can be accelerated.
Examples of the alcohol-based organic solvents include methanol, ethoxymethanol, ethanol, propanol, butanol, amyl alcohol, cyclohexanol, methylcyclohexanol, ethylene glycol monomethyl ether (2-methoxyethanol), ethylene glycol monoacetic ester, diethylene glycol monomethyl ether, diethylene glycol monoacetate, propylene glycol monoethyl ether, propylene glycol monoacetate, dipropylene glycol monoethyl ether, and methoxybutanol.
Examples of the ether-based organic solvents include diethyl ether, dipropyl ether, dibutyl ether, diamyl ether, diethyl acetals, dihexyl ether, dimethoxymethane, dimethoxyethane, trioxane, and dioxane.
Examples of the ketone-based organic solvents include acetone, methyl ethyl ketone, methyl propyl ketone, methyl isobutyl ketone, methyl amyl ketone, methyl cyclohexyl ketone, diethyl ketone, ethyl butyl ketone, trimethylnonane, acetonitrileacetone, dimethyl oxide, phorone, cyclohexanone, and diacetone alcohol.
The step in which the compound (A) and the compound (B) are polymerized in the solvent by the ethylenically unsaturated groups can be conducted, for example, by a heat treatment, irradiation with electromagnetic waves, irradiation with electron beams, irradiation with a plasma, etc. The electromagnetic waves include ultraviolet ray, X rays, γ rays, etc. An optimal polymerization method may be selected in accordance with reactivity, running cost, production efficiency, etc. With respect to electromagnetic waves, irradiation with ultraviolet ray is preferred from the standpoint of simplicity. In cases when the polymerization is actually performed using ultraviolet ray, the light source therefor need not be one which selectively emits only light within the ultraviolet wavelength region, and may be one which emits light including electromagnetic waves within the ultraviolet wavelength region. From the standpoints of a reduction in polymerization period, ease of control of polymerization conditions, etc., it is preferable that the ultraviolet ray has a higher intensity than the electromagnetic waves within the other wavelength ranges.
The electromagnetic waves can be emitted by, for example, a halogen lamp, xenon lamp, UV lamp, excimer lamp, metal halide lamp, rare-gas fluorescent lamp, mercury lamp, or the like. The ultraviolet ray can be emitted by a low-pressure mercury lamp, an excimer laser lamp, or the like.
It is preferred to add a polymerization initiator, a polymerization promoter, etc. to the liquid to be subjected to the polymerization reaction, namely, the solution including a solvent, the compound (A), and the compound (B). Thus, the rate of polymerization can be heightened. The polymerization initiator and the polymerization promoter are not particularly limited, and may be suitably selected in accordance with the structures of the compounds used, polymerization method, etc.

Examples of the polymerization initiator are shown below. Examples of initiators for the polymerization by electromagnetic waves include benzoin ethers, dialkyl benzyl ketals, dialkoxyacetophenones, acylphosphine oxides or bisacylphosphine oxides, $\alpha$-diketones (e.g., 9,10-phenanthrenequinoen), diacetylquinone, furylquinone, anisylquinone, 4,4'-dichlorobenzylquinone, 4,4'-dialkoxybenzylquinones, and camphorquinone.

Examples of initiators for the polymerization by heat include azo compounds (e.g., 2,2'-azobis(isobutyronitrile) (AIBN) or azobis(4-cyanovalerianic acid), peroxides (e.g., dibenzoyl peroxide, dilauroyl peroxide, tert-butyl peroctanoate, tert-butyl perbenzoate, or di(tert-butyl) peroxide), aromatic diazonium salts, bissulfonium salts, aromatic iodonium salts, aromatic sulfonium salts, potassium persulfate, ammonium persulfate, alkyllithiums, cumylpotassium, sodium naphthalene, and distyryl dianion. Of these, benzopinacol and 2,2'-dialkylbenzopinacols are especially preferred as initiators for radical polymerization.

It is preferred to use such peroxides and $\alpha$-diketones in combination with an aromatic amine in order to accelerate polymerization initiation. This combination is called a redox system. An example of such a system is a combination of benzoyl peroxide or camphorquinone with an amine (e.g., N,N-dimethyl-p-toluidine, N,N-dihydroxyethyl-p-toluidine, ethyl p-dimethylaminobenzoate, or a derivative thereof). Furthermore, a system including a peroxide in combination with ascorbic acid, a barbiturate, or a sulfinic acid as a reducing agent is also preferred because this system accelerates polymerization initiation.

Next, in the step in which the solution is brought into contact with a semipermeable layer, it is preferred to evenly and thinly apply the solution to the semipermeable layer. This step can be regarded as a step in which a layer of the solution is formed on a semipermeable layer. Specifically, examples of methods for the step of bringing the solution into contact with a semipermeable layer include a method in which the solution is applied to the semipermeable layer using a coating device such as a spin coater, wire-wound bar, flow coater, die coater, roll coater, or sprayer.

The thickness of the polymer layer to be formed later can be regulated in this step by regulating the thickness of the solution layer on the semipermeable layer, time period of contact between the semipermeable layer and the solution, solid content in % by weight of the solution, etc.

The step in which the hydrolyzable groups of the compound (A) are condensed is performed by subjecting the coated semipermeable layer to a heat treatment. With respect to the heating temperature in this treatment, the heating is usually conducted preferably at 20°C or higher, more preferably at 40°C or higher, in order to cause the condensation reaction to proceed speedily. The condensation reaction temperature must be lower than the temperatures at which the supporting layer of the semipermeable layer melts, and is preferably 150°C or lower, more preferably 120°C or lower.

So long as the reaction temperature is 20°C or higher, the hydrolysis and condensation reaction proceed speedily. So long as the reaction temperature is 150°C or lower, control of the hydrolysis and condensation reaction is easy. By adding a catalyst which accelerates the hydrolysis or condensation, the reaction can be caused to proceed at lower temperatures. Furthermore, in the present invention, heating conditions and humidity conditions are selected to suitably conduct the condensation reaction so as to result in a polymer layer having pores.

The content of the compound (A) in the reaction liquid is preferably 10 parts by weight or larger, more preferably 20-50 parts by weight, per 100 parts by weight of the solid matter contained in the reaction liquid. The term "solid matter contained in the reaction liquid" herein means the components which remain after the solvent and any other volatile components are removed from all the components of the reaction liquid and which are to be finally included as the polymer layer in the polymer-coated semipermeable membrane to be obtained by the production process according to the present invention. In cases when the content of the compound (A) is within that range, the polymer layer obtained has a sufficient degree of crosslinking and does not dissolve away, making it possible to stably perform membrane filtration. In the case where the reaction liquid contains a plurality of compounds (A), it is desirable that the total content thereof satisfies that range.

The content of the compound (B) in the reaction liquid is preferably 90 parts by weight or less, more preferably 5-80 parts by weight, per 100 parts by weight of the solid matter contained in the reaction liquid. In the case where the reaction liquid contains a plurality of compounds (B), it is desirable that the total content thereof satisfies that range.

In step (b), the step of dissolving the compound (A) in a solvent is conducted in the same manner as in the step of dissolving the compound (A) and the compound (B) in a solvent in step (a) described above.

In step (b), the step of condensing the hydrolyzable groups of the compound (A) in the solvent is conducted in the same manner as in the step of condensing the hydrolyzable groups of the compound (A) in step (a) described above.

In step (b), the step in which a solution of both a condensate of the compound (A) and the compound (B) is brought into contact with a semipermeable layer is conducted in the same manner as in the step of bringing a solution into contact with a semipermeable layer in step (a) described above.

In step (b), the step in which a mixture of the condensate of the compound (A) and the compound (B) is polymerized on the semipermeable layer by the ethylenically unsaturated groups is conducted in the same manner as in the step of polymerizing the compound (A) and the compound (B) in a solvent by the ethylenically unsaturated groups in step (a).

In step (c), the step of dissolving the compound (A) and the compound (B) in a solvent is conducted in the same manner as in the step of dissolving the compound (A) and the compound (B) in a solvent in step (a) described above. The step of bringing the mixture solution of the compound (A) and the compound (B) into contact with a semipermeable layer is conducted in the same manner as in the step of bringing a solution into contact with a semipermeable layer in step (a) described above.

In step (c), the step in which the compound (A) and the compound (B) are polymerized on the semipermeable layer by the ethylenically unsaturated groups is conducted in the same manner as in the step of polymerizing the compound (A) and the compound (B) in a solvent by the ethylenically unsaturated groups in step (a) described above. In step (c), the step in which condensation by the hydrolyzable groups of the compound (A) is performed on the semipermeable layer is conducted in the same manner as in the step of condensing the hydrolyzable groups of the compound (A) in step (a) described above.

Although the polymer-coated semipermeable membrane thus obtained can be used as such, it is preferred to hydrophilize the membrane surfaces with, for example, an alcohol-containing aqueous solution, an aqueous alkali solution, or the like before use.

[3. Formation of Semipermeable Layer]

The process for producing the polymer-coated semipermeable membrane may include a step in which a semipermeable layer is formed.

(1) Asymmetric Semipermeable Layer

An asymmetric semipermeable layer is obtained, for example, by dissolving a polymer as a membrane material in a solvent, pouring the resultant polymer solution on a glass plate or the like, and then coagulating the layer of the solution in a nonsolvent such as water. Such a membrane production method is generally called a nonsolvent-induced phase separation method. (The method is described in detail in The Membrane Society of Japan ed., Maku-Gaku Jikken Shirīzu Jinkō Maku-hen (Membranology Experiment Series, Artificial Membrane Volume), Kyoritsu Shuppan Co., Ltd. (1993).)

For forming an asymmetric semipermeable layer by the nonsolvent-induced phase separation method, cellulose acetate, cellulose triacetate, a polyamide or the like is used as a membrane material, and acetone, dimethylformamide, dioxane, N-methyl-2-pyrrolidone or the like is used as a solvent.

(2) Composite Semipermeable Layer

For reasons of membrane supporting property, preventing clogging, and ensuring water permeability, it is preferred to successively superpose a layer with fine pores on a layer with coarse pores. Consequently, in a preferred step for forming a composite semipermeable layer, a supporting layer is disposed on a substrate and, thereafter, a separation functional layer is further disposed on the supporting layer.

The material of the substrate is as described hereinabove.

The supporting layer can be produced by forming a layer of any of the materials shown above on the above-described substrate by the method described in Office of Saline Water Research and Development Progress Report, No. 359 (1968).

For example, the supporting layer is formed by casting an N,N-dimethylformamide solution of a polysulfone on a densely woven polyester fabric or nonwoven fabric in a given thickness and subjecting the cast solution to wet coagulation in an aqueous solution containing 0.5% by weight sodium dodecyl sulfate and 2% by weight DMF.

The step of forming a separation functional layer may include the formation of a polyamide by subjecting a polyfunctional amine and a polyfunctional acid halide to interfacial polycondensation on the supporting layer or may include the formation of a separation functional layer by the nonsolvent-induced phase separation method, as described above.

In particular, the method in which a polyfunctional amine and a polyfunctional acid halide are subjected to interfacial polycondensation is explained. In the interfacial polycondensation, an aqueous solution containing any of the polyfunctional amines described above and an organic-solvent solution which contains any of the polyfunctional acid halides described above and which is not miscible with water are used, and the aqueous solution and the organic-solvent solution are brought into contact with each other on the supporting layer to thereby perform the polycondensation.

The kinds of polyfunctional amines are as already explained hereinabove. The aqueous solution containing a polyfunctional amine has a polyfunctional-amine concentration of preferably 0.1-20% by weight, more preferably 0.5-15% by weight.

The kinds of polyfunctional acid halides are as already explained hereinabove.

The organic solvent in which a polyfunctional acid halide is to be dissolved is preferably one which is immiscible with water and does not break the supporting layer. The organic solvent may be any such organic solvent which does not inhibit the reaction for yielding a crosslinked polyamide. Representative examples thereof include liquid hydrocarbons and halogenated hydrocarbons such as trichlorotrifluoroethane. However, when freedom from ozonosphere depletion, availability, handleability, and safety in handling are taken into account, it is preferred to use one of octane, nonane, decane, undecane, dodecane, tridecane, tetradecane, heptadecane, hexadecane, cyclooctane, ethylcyclohexane, 1-octene, 1-decene, and the like or a mixture of two or more thereof.

The concentration of the polyfunctional acid halide in the organic-solvent solution thereof is preferably in the range of 0.01-10% by weight, more preferably in the range of 0.02-2.0% by weight. In cases when the concentration thereof is in that range, a sufficient reaction rate is obtained and side reactions can be inhibited from occurring. It is more preferred to incorporate an acylation catalyst such as N,N-dimethylformamide into the organic-solvent solution, because the interfacial polycondensation is accelerated thereby.

The aqueous solution containing a polyfunctional amine and the organic-solvent solution containing a polyfunctional acid halide may contain compounds such as an acylation catalyst, polar solvent, acid scavenger, surfactant, and antioxidant according to need, so long as such compounds do not inhibit the reaction between the two ingredients.

The aqueous solution of a polyfunctional amine is infiltrated into the microporous supporting membrane by immersion or coating. Thereafter, the excess aqueous solution is thoroughly removed so that no droplets remain on the membrane. By thoroughly removing the excess aqueous solution, it is rendered possible to avoid a trouble that portions where droplets remain become membrane defects through membrane formation to lower the membrane performance. Examples of methods for removing the excess solution include a method in which the membrane surfaces are vertically held to cause the excess solution to flow down naturally. As a method for removing the excess solution, use can be made, for example, of a method in which the supporting membrane which has been contacted with the aqueous polyfunctional-amine solution is held vertically to make the excess aqueous solution to flow down naturally or a method in which streams of a gas, e.g., nitrogen, are blown against the supporting membrane from air nozzles to forcedly remove the excess solution, as described in JP-A-2-78428. After the removal of the excess solution, the membrane surfaces may be dried to remove some of the water contained in the aqueous solution.

Thereafter, an organic-solvent solution containing any of the polyfunctional acid halides described hereinabove is applied to the supporting layer into which a polyfunctional amine has been incorporated, and a separation functional layer of a crosslinked polyamide is formed by interfacial polycondensation.

After the organic-solvent solution of a polyfunctional acid halide is brought into contact and interfacial polycondensation is conducted to form a separation functional layer including a crosslinked polyamide on the supporting layer, it is desirable to remove the excess solvent. For removing the excess solvent, use can be made, for example, of a method in which the membrane is held vertically to remove the excess organic solvent by allowing the solvent to flow down naturally. In this case, the time period during which the membrane is held vertically is preferably between 10 seconds and 5 minutes, more preferably between 30 seconds and 3 minutes. In case where the time period thereof is too short, a separation functional layer is not completely formed. In case where the time period thereof is too long, the organic solvent is excessively removed and this is prone to result in the occurrence of defects and a decrease in performance.

The composite semipermeable membrane obtained by the method described above may be further subjected, for example, to a step in which the composite semipermeable membrane is treated with hot water at a temperature in the range of 40-150°C, preferably in the range of 40-130°C, for 1-10 minutes, preferably 2-8 minutes. Thus, the solute rejection performance and water permeability of the composite semipermeable membrane can be further improved.

EXAMPLES

The present invention is explained below in more detail by reference to Examples. However, the present invention should not be construed as being limited by the following Examples.

[1. Production of Membranes]

(Comparative Example 1) Semipermeable Polyamide Membrane

A 16% by weight dimethylformamide solution of a polysulfone was cast in a thickness of 200 $\mu$m on nonwoven poly(ethylene terephthalate) fabric as a substrate at room temperature (25°C). Immediately after the casting, the coated nonwoven fabric was immersed in pure water and allowed to stand therein for 5 minutes to thereby produce a supporting membrane including the substrate and a supporting layer.

The supporting membrane thus obtained was immersed in a 2.5% by weight aqueous solution of m-phenylenediamine for 1 minute and then slowly pulled up vertically. Nitrogen was blown thereagainst from an air nozzle to remove the excess aqueous solution from the surfaces of the supporting membrane. Thereafter, a 0.08% by weight n-decane solution of trimesoyl chloride was applied to a surface of the membrane so that the membrane surface was completely wetted, and this membrane was then allowed to stand still for 30 seconds. Next, the membrane was vertically held for 1 minute in order to remove the excess solution from the membrane, and some of the n-decane present on the membrane surface was removed with a blower at room temperature. Thereafter, the coated membrane was cleaned with 90°C hot water for 2 minutes to obtain a semipermeable membrane.

(Comparative Example 2) Semipermeable Cellulose Acetate Membrane

SC-3000 membrane, which is an asymmetric semipermeable membrane made of cellulose acetate and manufactured by Toray Industries Inc., was used as the membrane of Comparative Example 2.

(Examples 1 to 6) Polymer-coated Semipermeable Membranes

3-Acryloxypropyltrimethyoxysilane as compound (A), sodium 4-vinylphenylsulfonate as compound (B), and 2,2-dimethoxy-2-phenylacetophenone as a photopolymerization initiator were dissolved in water in concentrations of 80 mM, 80 mM, and 8.5 mM, respectively.
The solution thus obtained was irradiated with 365-nm ultraviolet ray with a UV irradiator, thereby obtaining a polymer solution for polymer layer formation. The irradiation intensity of the UV irradiator was set at 40 mW/cm$^2$ in terms of the value measured with an integrating ultraviolet dosimeter.
This polymer solution was brought into contact with a surface of the semipermeable polyamide membrane (semipermeable layer) of Comparative Example 1 for 30 seconds, and the excess solution was then removed using a spin coater, thereby forming a layer of the polymer solution on the semipermeable polyamide membrane. In this operation, the number of revolutions (also called rotational speed) of the spin coater was regulated in each of Examples 1 to 6, thereby forming polymer layers differing in thickness. Specifically, the number of revolutions of the spin coater was increased to thereby reduce the polymer layer thickness, in the order of Examples 1, 2, ⋯ 6.
Next, the semipermeable membranes on which layers of the polymer solution had been formed were held in a 120°C hot-air drying oven for 5 minutes, thereby condensing the silicon compound having hydrolyzable groups directly bonded to the silicon atom. Thus, polymer-coated semipermeable membranes were obtained. The thickness of the polymer layer of each polymer-coated semipermeable membrane was determined by vacuum-drying a piece of the membrane to obtain a sample, examining a cross-section of the sample with a scanning electron microscope, and averaging the thicknesses of representative ten portions thereof to thereby calculate the polymer layer thickness.
The thickness of the polymer layer of each of the polymer-coated semipermeable membranes thus obtained, initial performance thereof (permeation flux and salt rejection) determined just after the production, and performance thereof (permeation flux, salt rejection, and salt permeation rate) determined after a chlorine resistance test are shown in Table 1.
In the following Examples, there are cases where the explanation is partly omitted by citing another Example. However, even in cases when another Example is cited, there are cases where the number of revolutions of the spin coater differs. For example, even in cases when there is the expression "in the same manner as in Example 1", the number of revolutions of the spin coater may differ.

(Examples 7 to 10) Polymer-coated Semipermeable Membranes

Polymer-coated semipermeable membranes were obtained by conducing the same operation as in Example 1, except that the reverse osmosis membrane of Comparative Example 2, which was made of cellulose acetate, was used in place of the semipermeable polyamide membrane and that the number of revolutions of the spin coater was changed.

(Example 11) Polymer-coated Semipermeable Membrane

A polymer-coated semipermeable membrane was obtained by conducing the same operation as in Example 1, except that 1-allyl-3-sulfopropylimidazolium chloride was used as compound (B) and the number of revolutions of the spin coater was changed.

(Example 12) Polymer-coated Semipermeable Membrane

A polymer-coated semipermeable membrane was obtained by conducing the same operation as in Example 11, except that 1-vinyl-3-sulfopropylimidazolium chloride was used as compound (B).

(Example 13)

3-Acryloxypropyltrimethyoxysilane, sodium 4-vinylphenylsulfonate, and 2,2-dimethoxy-2-phenylacetophenone as a photopolymerization initiator were dissolved in water in concentrations of 100 mM, 100 mM, and 10 mM, respectively. This solution was subjected to irradiation with ultraviolet ray and subjected to subsequent steps by performing the same operation as in Example 11. Thus, a polymer-coated semipermeable membrane was obtained.

(Example 14)

3-Acryloxypropyltrimethyoxysilane, [2-(methacryloyloxy)ethyl]dimethyl(3-sulfopropyl)ammonium hydroxide, and 2,2-dimethoxy-2-phenylacetophenone as a photopolymerization initiator were dissolved in water in concentrations of 100 mM, 100 mM, and 10 mM, respectively. This solution was subjected to irradiation with ultraviolet ray and subjected to subsequent steps by performing the same operation as in Example 11. Thus, a polymer-coated semipermeable membrane was obtained.

(Example 15)

In each of Examples 15 to 24, a polymer layer having both anionic groups and cationic groups was formed on a semipermeable polyamide membrane.

In Example 15, 3-acryloxypropyltrimethoxysilane as compound (A), sodium 4-vinylphenylsulfonate as compound (B1), [2-(methacryloyloxy)ethyl]dimethyl(3-sulfopropyl)ammonium hydroxide as compound (B2), and 2,2-dimethoxy-2-phenylacetophenone as a photopolymerization initiator were dissolved in water in concentrations of 100 mM, 80 mM, 20 mM, and 10 mM, respectively. Next, the resultant solution was irradiated with ultraviolet ray in the same manner as in Example 1 to obtain a polymer solution.

This polymer solution was used to form a polymer layer on the semipermeable polyamide membrane by performing the same operation as in Example 1. However, the number of revolutions of the spin coater was regulated, and the completed polymer layer had a thickness of 300 nm.

The initial performance of each of the polymer-coated semipermeable membranes thus obtained and the performance thereof as determined after a chlorine resistance test are shown in Table 1. The charge ratio among the compounds (A), (B1), and (B2) is shown in Table 3.

(Example 16)

The same procedure as in Example 15 was conducted, except that the concentration of the sodium 4-vinylphenylsulfonate as compound (B1) was changed to 60 mM and the concentration of the [2-(methacryloyloxy)ethyl]dimethyl(3-sulfopropyl)ammonium hydroxide as compound (B2) was changed to 40 mM. The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 17)

The same procedure as in Example 15 was conducted, except that the concentration of the sodium 4-vinylphenylsulfonate as compound (B1) was changed to 50 mM and the concentration of the [2-(methacryloyloxy)ethyl]dimethyl(3-sulfopropyl)ammonium hydroxide as compound (B2) was changed to 50 mM. The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 18)

The same procedure as in Example 15 was conducted, except that sodium acrylate was used as compound (B1). The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 19)

The same procedure as in Example 16 was conducted, except that sodium acrylate was used as compound (B1). The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 20)

The same procedure as in Example 17 was conducted, except that sodium acrylate was used as compound (B1). The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 21)

The same procedure as in Example 17 was conducted, except that 1-allyl-3-methylimidazolium chloride was used as compound (B2). The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 22)

The same procedure as in Example 21 was conducted, except that sodium acrylate was used as compound (B1) and that the charge ratio among compounds (A), (B1), and (B2) was changed. The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 23)

The same procedure as in Example 22 was conducted, except that 1-vinylimidazole was used as compound (B2) and that the charge ratio among compounds (A), (B1), and (B2) was changed. The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Example 24)

The same procedure as in Example 23 was conducted, except that sodium acrylate was used as compound (B1) and that the charge ratio among compounds (A), (B1), and (B2) was changed. The polymer layer of the polymer-coated semipermeable membrane thus obtained had a thickness of 300 nm. The initial performance of the polymer-coated semipermeable membrane thus obtained and the performance thereof as determined after a chlorine resistance test are shown in Table 2. The charge ratio among the compounds (A), (B1), and (B2) is shown in Table 3.

(Comparative Example 3) Semipermeable Membrane including Supporting Layer and Polymer Layer directly formed thereon

A membrane was produced by conducting the same operation as in Example 15, except that a polymer layer was formed not on the semipermeable polyamide membrane but on a microporous supporting membrane.
The polymer layer had a thickness of 300 nm.
The initial performance of the semipermeable membrane thus obtained and the performance thereof determined after a chlorine resistance test are shown in Table 2.

[2. Evaluation of the Membranes]

(2-1) Thickness of Polymer Layer

A piece of each membrane was vacuum-dried, and a cross-section of the dried membrane was examined with a scanning electron microscope. With respect to one membrane sample, the thickness of the polymer layer was measured at any ten portions, and an arithmetic average thereof was calculated. The average value obtained is shown below as the thickness of the polymer layer.

(2-2) Salt Rejection and Permeation Flux

An aqueous sodium chloride solution having a salt concentration of 500 mg/L and regulated so as to have a temperature of 25°C and a pH of 6.5 was supplied to a semipermeable membrane (including a polymer-coated semipermeable membrane) at an operation pressure of 0.75 MPa to thereby perform a membrane filtration treatment.
The permeate obtained was examined for sodium chloride concentration, and the salt rejection was determined from the results using the following equation.

$$\text{Salt rejection (\%)} = 100 \times \{1 - [(\text{sodium chloride concentration in permeate})/(\text{sodium chloride concentration in feed water})]\}$$

Furthermore, the membrane permeation flux ($m^3/m^2/day$) was determined from the water permeability ($m^3$) per day per square meter of the membrane, which had been obtained under the conditions shown above.

(2-3) Chlorine Resistance Test

A semipermeable membrane or a polymer-coated semipermeable membrane was immersed for 15 hours in an aqueous sodium hypochlorite solution containing copper(II) chloride in an amount of 1 mg/L and having a chlorine concentration regulated to 500 mg/L, and was examined for the salt rejection and membrane permeation flux. A change ratio of salt permeation rate was determined as an index to chlorine resistance using the following equation.

$$\text{Change ratio of salt permeation rate} = (\text{salt permeation rate after the chlorine resistance test})/(\text{salt permeation rate as initial performance})$$

[3. Results]

In Table 1, the polymer-coated semipermeable membranes indicated by Examples 1 to 14 each not only have a salt rejection equal to or higher than those of the semipermeable membranes of Comparative Examples 1 and 2 but also have a reduced change ratio of salt permeation rate. It can hence be seen that the polymer-coated semipermeable membranes of the Examples each retain the salt-removing performance of the semipermeable membrane and have resistance to oxidizing agents even in the presence of heavy metals.
In Table 2, the polymer-coated semipermeable membranes indicated by Examples 15 to 24 each not only have a salt rejection equal to or higher than that of the semipermeable membrane of Comparative Example 1 but also have a reduced change ratio of salt permeation rate. It can hence be seen that the polymer-coated semipermeable membranes of the Examples each retain the salt-removing performance of the semipermeable membrane and have resistance to oxidizing agents even in the presence of heavy metals.
The membrane of Comparative Example 1 which had undergone the chlorine resistance test had a salt rejection of 80.2% and hence had a salt permeation rate of 100-80.2 = 19.8%. Meanwhile, the membrane of Comparative Example 3 which had undergone the chlorine resistance test had a salt rejection of 90.0% and hence had a salt permeation rate of 100-90.0 = 10.0%. Consequently, in the case where the membrane of Comparative Example 3 which has undergone the chlorine resistance test is superposed on the membrane of Comparative Example 1 which has undergone the chlorine resistance test, then the salt permeation rate is 0.198×0.100×100 (%) = 1.98 (%) and the salt rejection in this case is 100-1.98 = 98.02%. Meanwhile, in Example 15, in which the polymer layer of Comparative Example 3 was formed on the semipermeable polyamide membrane of Reference Example 3, the polymer-coated semipermeable membrane has a salt rejection of 99.17% after the chlorine resistance test, showing that this polymer-coated semipermeable membrane exhibits a higher salt rejection than in the case shown above where two membranes are stacked. It can hence be seen that the semipermeable polyamide membrane exhibited resistance to the oxidizing agent in the presence of the heavy metal since the heavy metal was inhibited from coming into contact with the polyamide.

Table 1

| | Material of semipermeable membrane | Thickness of polymer layer (nm) | Initial performance | | After chlorine resistance test | | |
|---|---|---|---|---|---|---|---|
| | | | Permeation flux $(m^3/m^2/d)$ | Salt rejection (%) | Permeation flux $(m^3/m^2/d)$ | Salt rejection (%) | Change ratio of salt permeation rate |
| Comp. Ex. 1 | polyamide | none | 0.70 | 99.1 | 1.09 | 80.2 | 22.0 |
| Comp. Ex. 2 | cellulose acetate | none | 0.28 | 97.1 | 0.43 | 91.6 | 2.90 |
| Ex. 1 | polyamide | 510 | 0.20 | 99.3 | 0.22 | 99.3 | 1.00 |
| Ex. 2 | polyamide | 315 | 0.34 | 99.2 | 0.38 | 99.2 | 1.00 |
| Ex. 3 | polyamide | 200 | 0.42 | 99.3 | 0.47 | 99.2 | 1.14 |
| Ex. 4 | polyamide | 160 | 0.46 | 99.2 | 0.56 | 97.4 | 3.25 |
| Ex. 5 | polyamide | 70 | 0.62 | 99.2 | 0.80 | 96.3 | 4.63 |
| Ex. 6 | polyamide | 40 | 0.69 | 99.3 | 0.88 | 88.9 | 15.9 |
| Ex. 7 | cellulose acetate | 420 | 0.11 | 97.4 | 0.14 | 97.2 | 1.08 |
| Ex. 8 | cellulose acetate | 295 | 0.13 | 97.4 | 0.17 | 96.8 | 1.23 |
| Ex. 9 | cellulose acetate | 120 | 0.21 | 97.2 | 0.28 | 96.1 | 1.39 |
| Ex. 10 | cellulose acetate | 40 | 0.25 | 97.1 | 0.34 | 93.8 | 2.14 |
| Ex. 11 | polyamide | 300 | 0.60 | 99.1 | 0.64 | 98.5 | 1.50 |
| Ex. 12 | polyamide | 300 | 0.70 | 99.0 | 0.72 | 98.5 | 1.59 |
| Ex. 13 | polyamide | 300 | 0.336 | 99.24 | 0.346 | 99.06 | 1.28 |
| Ex. 14 | polyamide | 300 | 0.238 | 99.19 | 0.244 | 99.01 | 1.26 |

Table 2

| | Initial performance | | After chlorine resistance test | | |
|---|---|---|---|---|---|
| | Salt rejection (%) | Permeation flux $(m^3/m^2/d)$ | Salt rejection (%) | Permeation flux $(m^3/m^2/d)$ | Change ratio of salt permeation rate |
| Comp. Ex. 3 | 90.0 | 1.1 | 90.0 | 1.1 | 1.0 |
| Ex. 15 | 99.24 | 0.308 | 99.17 | 0.311 | 1.1 |
| Ex. 16 | 99.06 | 0.265 | 98.98 | 0.268 | 1.09 |
| Ex. 17 | 99.15 | 0.249 | 99.09 | 0.252 | 1.08 |
| Ex. 18 | 99.24 | 0.276 | 99.15 | 0.281 | 1.14 |
| Ex. 19 | 99.10 | 0.260 | 99.01 | 0.260 | 1.1 |

(continued)

| | Initial performance | | After chlorine resistance test | | |
|---|---|---|---|---|---|
| | Salt rejection (%) | Permeation flux ($m^3/m^2/d$) | Salt rejection (%) | Permeation flux ($m^3/m^2/d$) | Change ratio of salt permeation rate |
| Ex. 20 | 99.10 | 0.238 | 99.02 | 0.238 | 1.09 |
| Ex. 21 | 99.10 | 0.240 | 99.01 | 0.239 | 1.05 |
| Ex. 22 | 99.10 | 0.236 | 99.02 | 0.237 | 1.07 |
| Ex. 23 | 99.05 | 0.220 | 99.01 | 0.219 | 1.06 |
| Ex. 24 | 99.08 | 0.224 | 99.02 | 0.227 | 1.10 |

Table 3

| | Compound (A) | Compound (B1) | Compound (B2) | Charge ratio (A):(B1):(B2) |
|---|---|---|---|---|
| Ex. 15 | 3-acryloxypropyltrimethoxysilane | sodium 4-vinylphenylsulfonate | [2-(methacryloyloxy)-ethyl]dimethyl(3-sulfopropyl)ammonium hydroxide | 50:40:10 |
| Ex. 16 | 3-acryloxypropyltrimethoxysilane | sodium 4-vinylphenylsulfonate | [2-(methacryloyloxy)-ethyl]dimethyl(3-sulfopropyl)ammonium hydroxide | 50:30:20 |
| Ex. 17 | 3-acryloxypropyltrimethoxysilane | sodium 4-vinylphenylsulfonate | [2-(methacryloyloxy)-ethyl]dimethyl(3-sulfopropyl)ammonium hydroxide | 50:25:25 |
| Ex. 18 | 3-acryloxypropyltrimethoxysilane | sodium acrylate | [2-(methacryloyloxy)-ethyl]dimethyl(3-sulfopropyl)ammonium hydroxide | 50:40:10 |
| Ex. 19 | 3-acryloxypropyltrimethoxysilane | sodium acrylate | [2-(methacryloyloxy)-ethyl]dimethyl(3-sulfopropyl)ammonium hydroxide | 50:30:20 |
| Ex. 20 | 3-acryloxypropyltrimethoxysilane | sodium acrylate | [2-(methacryloyloxy)-ethyl]dimethyl(3-sulfopropyl)ammonium hydroxide | 50:25:25 |
| Ex. 21 | 3-acryloxypropyltrimethoxysilane | sodium 4-vinylphenylsulfonate | 1-allyl-3-methylimidazolium chloride | 50:25:25 |
| Ex. 22 | 3-acryloxypropyltrimethoxysilane | sodium acrylate | 1-allyl-3-methylimidazolium chloride | 50:40:10 |
| Ex. 23 | 3-acryloxypropyltrimethoxysilane | sodium 4-vinylphenylsulfonate | 1-vinylimidazole | 50:25:25 |
| Ex. 24 | 3-acryloxypropyltrimethoxysilane | sodium acrylate | 1-vinylimidazole | 50:40:10 |

INDUSTRIAL APPLICABILITY

The composite semipermeable membrane of the present invention can be utilized in the field of water treatments such as solid-liquid separation, liquid separation, filtration, purification, concentration, sludge treatment, seawater desalination, potablewater production, pure-water production, wastewater recycling, volume reduction of wastewater, and recovery of valuable substances.

While the present invention has been described in detail and with reference to specific embodiments thereof, it will be apparent to one skilled in the art that various changes and modifications can be made therein without departing from the spirit and scope thereof. This application is based on a Japanese patent application filed on November 28, 2014 (Application No. 2014-241228) and a Japanese patent application filed on December 26, 2014 (Application No. 2014-264348), the entire contents thereof being incorporated herein by reference.

**Claims**

1. A coated semipermeable membrane comprising a semipermeable layer and a polymer layer formed on the semipermeable layer,
   wherein the polymer layer comprises a polymerization product formed by both condensation of hydrolyzable groups possessed by the following compound (A) and polymerization of the compound (A) with the following compound (B):

   (A) a silicon compound having a silicon atom, a reactive group comprising an ethylenically unsaturated group directly bonded to the silicon atom, and a hydrolyzable group directly bonded to the silicon atom; and
   (B) a compound other than the compound (A), which has both a hydrophilic group and an ethylenically unsaturated group.

2. The coated semipermeable membrane according to claim 1, wherein the hydrophilic group of the compound (B) is at least one functional group selected from a carboxyl group, a sulfonic acid group, and a phosphonic acid group.

3. The coated semipermeable membrane according to claim 1 or 2, wherein the compound (A) is represented by the following general formula (a):

   $$Si(R1)_m(R2)_n(R3)_{4-m-n} \qquad (a),$$

   in which R1 represents a reactive group comprising an ethylenically unsaturated group; R2 represents at least one group selected from the group consisting of alkoxy groups, alkenyloxy groups, a carboxy group, ketoxime groups, an isocyanate group, and halogen atoms; R3 represents at least one of hydrogen and alkyl groups; m and n are integers satisfying $m+n \leq 4$, $m \geq 1$, and $n \geq 1$; when m is 2 or larger, the R1 moieties may be the same or different; when n is 2 or larger, the R2 moieties may be the same or different; and when (4-m-n) is 2 or larger, the R3 moieties may be the same or different.

4. The coated semipermeable membrane according to any one of claims 1 to 3, wherein the polymer layer comprises a polymerization product formed by both condensation of the hydrolyzable groups possessed by the compound (A) and polymerization of the compound (A) with the compound (B) which is two or more compounds, and
   the two or more compounds (B) comprise the following compound (B1) and compound (B2):

   (B1) a compound other than the compound (A), which has one or more anionic groups and one or more ethylenically unsaturated groups; and
   (B2) a compound other than the compound (A) and the compound (B1), which has one or more cationic groups and one or more ethylenically unsaturated groups.

5. The coated semipermeable membrane according to claim 4, wherein the anionic group of the compound (B1) is at least one functional group selected from a carboxyl group, a sulfonic acid group, and a phosphonic acid group.

6. The coated semipermeable membrane according to claim 4 or 5, wherein the cationic group of the compound (B2) is at least one functional group selected from ammonium salts and imidazolium salts.

7. The coated semipermeable membrane according to any one of claims 1 to 6, wherein the polymer layer has a thickness of 50 nm to 500 nm.

8. The coated semipermeable membrane according to any one of claims 1 to 7, wherein the semipermeable layer comprises a microporous supporting layer and a separation functional layer disposed on the microporous supporting layer, and
the separation functional layer comprises a polyamide formed by polycondensation of a polyfunctional amine with a polyfunctional acid halide.

*Fig. 1*

*Fig. 2*

**INTERNATIONAL SEARCH REPORT**

| International application No. |
| --- |
| PCT/JP2015/083483 |

**A. CLASSIFICATION OF SUBJECT MATTER**
*B01D71/70*(2006.01)i, *B01D69/10*(2006.01)i, *B01D69/12*(2006.01)i, *B01D71/16*
(2006.01)i, *B01D71/56*(2006.01)i, *C08F230/08*(2006.01)i

According to International Patent Classification (IPC) or to both national classification and IPC

**B. FIELDS SEARCHED**

Minimum documentation searched (classification system followed by classification symbols)
B01D71/70, B01D69/10, B01D69/12, B01D71/16, B01D71/56, C08F230/08

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | WO 2012/077619 A1  (Toray Industries, Inc.),<br>14 June 2012 (14.06.2012),<br>claims 1 to 2; paragraphs [0039] to [0040],<br>[0065]; examples 1, 4<br>& US 2013/0313186 A1<br>claims 1 to 2; paragraphs [0046] to [0047],<br>[0065]; examples 1, 4<br>& EP 2650044 A1        & CN 103249473 A<br>& KR 10-2013-0143587 A | 1-6<br>7<br>8 |
| Y<br>A | WO 2012/105397 A1  (Toray Industries, Inc.),<br>09 August 2012 (09.08.2012),<br>claim 14; paragraph [0030]<br>& JP 5110227 B2        & US 2013/0284664 A1<br>claim 35; paragraph [0045]<br>& EP 2671628 A1        & CN 103338846 A<br>& KR 10-2014-0005936 A | 7<br>8 |

☒  Further documents are listed in the continuation of Box C.          ☐  See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 January 2016 (27.01.16) | Date of mailing of the international search report<br>09 February 2016 (09.02.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2015/083483

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-094641 A  (Toray Industries, Inc.), 30 April 2010 (30.04.2010), paragraphs [0016] to [0021] (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3133132 A
- US 4277344 A
- JP 2002336666 A
- JP 2010201303 A
- JP 9099228 A
- JP 2078428 A
- JP 2014241228 A
- JP 2014264348 A

### Non-patent literature cited in the description

- **KURIHARA et al.** Polymer Journal. The Society of Polymer Science, 1991, vol. 23, 513
- **ISHIKIRIYAMA et al.** Journal of Colloid and Interface Science. Academic Press Inc, 1995, vol. 171, 103
- **J. BRANDRUP ; E. H. IMMERGUT ; E. A. GRULKE.** Polymer Handbook. John Wiley & Sons Inc, 1999, II/181-II/319
- **M. FINEMAN et al.** Journal of Polymer Science. John Wiley & Sons Inc, 1950, vol. 5, 269
- **TAKAYUKI OTSU ; KAITEI KOBUNSHI GOSEI NO KAGAKU.** Chemistry of Polymer Synthesis. Kagaku-Dojin Publishing Company, Inc, 1992, 111-116
- *Office of Saline Water Research and Development Progress Report,* 1968, (359